# FASCICULE DE BREVET EUROPEEN

(11) **EP 2 873 139 B1**
(45) Date de publication et mention de la délivrance du brevet: **26.10.2016**
(21) Numéro de dépôt: 13744607.6
(22) Date de dépôt: 21.06.2013
(51) Int. Cl.: H02K 5/20, H02K 9/06, H02K 3/24

(54) **MACHINE ÉLECTRIQUE TOURNANTE POUR VÉHICULE AUTOMOBILE**
ELEKTRISCHE DREHMASCHINE FÜR EIN KRAFTFAHRZEUG
ROTATING ELECTRICAL MACHINE FOR A MOTOR VEHICLE

(30) Priorité: 11.07.2012 FR 1256656
(43) Date de publication de la demande: 20.05.2015
(73) Titulaire: Valeo Equipements Electriques Moteur, 94046 Créteil Cedex (FR)
(72) Inventeur: FAKES, Michel, F-59113 Seclin (FR); LUTUN, Jérémie, F-75012 Paris (FR); CAUBERT, Dominique, F-91230 Montgeron (FR)
(74) Mandataire: Ribeil, Alexandre
(86) Numéro de dépôt international: PCT/FR2013/051458
(87) Numéro de publication internationale: WO 2014/009623

(56) Documents cités:
- EP-A1- 0 539 339
- EP-A1- 0 671 802
- EP-A1- 0 998 011
- EP-A1- 1 093 209
- EP-A2- 0 671 801
- EP-A2- 0 917 278
- EP-A2- 0 989 657
- EP-A2- 1 120 883
- EP-A2- 2 061 139
- EP-A2- 2 264 868
- WO-A2-2008/000992
- DE-A1-102005 045 491
- FR-A1- 2 908 942
- US-A1- 2007 273 243

## Description

L'invention concerne notamment une machine électrique tournante, notamment un alternateur ou un alterno-démarreur, pour véhicule automobile.

Il est connu une machine électrique tournante selon le document EP2264868 ou encore selon le document DE102005045491.

La demande de brevet FR 2 856 532 décrit un alternateur pour véhicule automobile, qui comprend un rotor pourvu d'aimants permanents et de bobinages d'excitation. Cet alternateur est pourvu de ventilateurs pour son refroidissement.

La demande de brevet FR 2 785 464 décrit, quant à elle, un alternateur pourvu d'un bobinage de stator formant des chignons de part et d'autre de la carcasse du stator. Les étendues axiales des chignons présentent un écart, de manière à réduire le bruit de fonctionnement d'origine aéraulique.

Les demandes de brevet EP 762 607 et EP 671 802 décrivent d'autres alternateurs.

La demande de brevet EP 2 157 679 décrit une machine synchrone.

Il existe un besoin pour disposer d'une machine électrique tournante, notamment un alternateur, qui présente les avantages suivants :
- des performances augmentées, à savoir un courant de sortie élevé, dans un encombrement machine qui reste satisfaisant,
- l'absence ou la diminution du nombre d'aimants permanents, notamment en terres rares, sur le rotor, qui peuvent coûter extrêmement cher.

L'invention vise notamment à permettre d'atteindre ces avantages.

Dans ce but, il est possible d'augmenter les Ampère-Tours du rotor (**N*iex** = nombre de spires * courant d'excitation iex). Pour cela, dans un même encombrement rotor donné, il est possible de diminuer le nombre de spires (N) et augmenter le diamètre des fils, qui engendre la diminution de la résistance électrique R des fils (R=ro * L / S avec ro la résistivité d'un fil, L la longueur d'un fil et S sa section) et donc l'augmentation du courant iex.

Si iex augmente, les pertes par effet Joule Pj augmentent (**Pj** = Résistance cuivre * iex²). Il convient alors d'adapter la machine pour supporter la chaleur supplémentaire.

Par exemple, pour rendre le bobinage apte à supporter ce surplus de chaleur, il serait possible de changer la classe thermique des fils émaillés du bobinage et/ou le matériau de l'isolant entre les fils et les roues polaires. Ceci impliquerait un coût relativement élevé car plus la classe thermique du fil émaillé est grande, plus les coûts augmentent.

La classe thermique d'un matériau donne la tenue en température d'un matériau pendant un certain nombre d'heures d'utilisation défini selon une norme.

Travailler au-delà des limites engendrerait des risques de court-circuit et de fiabilité et cela ce n'est pas permis.

L'invention propose une nouvelle machine électrique tournante à performances élevées et coûts de revient raisonnables.

L'invention a ainsi pour objet une machine électrique tournante, notamment un alternateur ou un alterno-démarreur, pour véhicule automobile, comportant :
- un rotor portant à l'avant un ventilateur avant et à l'arrière un ventilateur arrière, ce rotor étant rotatif autour d'un axe de rotation,
- un stator comportant un corps de stator et au moins un bobinage placé sur le corps de stator, lequel bobinage forme des chignons avant et arrière de part et d'autre du corps de stator, la hauteur du chignon avant, mesurée suivant l'axe de rotation, est différente de, par exemple plus élevée que, celle du chignon arrière,
- un carter (1) dans lequel sont placés le stator et le rotor,
caractérisée par le fait que
- ce carter comportant des ouvertures sensiblement latérales avant et des ouvertures sensiblement latérales arrières au moins partiellement en regard des chignons respectivement avant et arrière, la superficie totale de ces ouvertures avant étant différente de, notamment plus petite que, la superficie totale des ouvertures arrières, et/ou
- le carter comporte un bossage, notamment réalisé d'un seul tenant avec le reste du carter ou formé par une entretoise fixée sur le reste du carter, lequel bossage s'étend en direction du sommet de l'un des chignons pour réduire le passage entre ce chignon et le carter,
de manière à générer une différence de pression entre l'avant du carter et l'arrière du carter propre à engendrer un flux d'air axial renforcé sensiblement parallèle à l'axe de rotation et circulant dans l'entrefer entre le rotor et le stator.

Lorsque le rotor comporte des dents et un bobinage d'excitation électrique, le flux d'air renforcé circule avantageusement entre les espaces des dents léchant ainsi le bobinage du rotor.

Grâce à l'invention, il est possible d'obtenir une machine électrique tournante à performances améliorées, qui peut débiter des courants de sortie élevés, tout en s'assurant que la température du rotor reste dans les limites tolérées, du fait du flux d'air axial renforcé obtenu par les dissymétries précitées. L'invention permet notamment d'éviter, pour la fabrication du rotor, d'avoir à utiliser des matériaux résistants aux hautes températures, matériaux qui s'avèrent être onéreux.

La machine peut être dépourvue de ventilateurs additionnels, notamment distincts du rotor, agencés pour produire un flux d'air axial supplémentaire, auquel cas le flux d'air axial dans la machine est généré essentiellement par les dissymétries précitées.

En variante, la machine peut être pourvue de ventilateurs additionnels, notamment distincts du rotor, pour produire un flux d'air axial supplémentaire qui vient compléter le flux d'air axial engendré par les dissymétries précitées.

La présence de plusieurs dissymétries permet de créer un flux d'air axial d'intensité satisfaisante pour le refroidissement.

La différence entre la hauteur du chignon avant et celle du chignon arrière est de préférence d'au moins 2.5 mm. Cette différence peut être comprise entre 2.5 mm et 5 mm notamment.

Le taux d'ouverture avant est par exemple plus faible que 90% ou 80% du taux d'ouverture.

En variante, la superficie des ouvertures arrières peut être plus faible que 90% ou 80% de celle de l'avant.

Dans un exemple de mise en ouvre de l'invention, le jeu, mesuré suivant l'axe de rotation, entre l'extrémité du ventilateur avant et le carter est différent de, notamment plus grand que, le jeu entre l'extrémité du ventilateur arrière et le carter.

Par exemple, la différence entre le jeu, mesuré suivant l'axe de rotation, entre l'extrémité du ventilateur avant et le carter d'une part et le jeu entre l'extrémité du ventilateur arrière et le carter d'autre part, est supérieur à 2 ou 3 mm.

Le cas échéant, la différence entre le jeu, mesuré suivant l'axe de rotation, entre le sommet du chignon avant et le carter d'une part et le jeu entre le sommet du chignon arrière et le carter d'autre part, est supérieur à 2.5 mm.

Avantageusement le rotor est dépourvu d'aimants permanents, notamment d'aimants insérés entre des griffes ou dents du rotor. Ainsi le flux d'air axial renforcé engendré par la dissymétrie est d'autant plus grand.

Dans un exemple de mise en oeuvre de l'invention, le rotor est capable de produire environ 1 500 Ampère-tours.

Si on le souhaite, le rotor comporte un bobinage de fils ayant une section totale d'au moins 200mm2.

Dans un exemple de mise en oeuvre de l'invention, le rotor peut comporter un seul ventilateur, soit à l'avant soit à l'arrière du rotor.

Dans ce cas, la présence d'un ventilateur sur un seul côté du rotor génère une dissymétrie de pression qui permet de renforcer le flux d'air axial.

L'invention a également pour objet une machine électrique tournante, notamment un alternateur ou un alterno-démarreur, pour véhicule automobile, comportant :
- un rotor portant à l'avant un ventilateur avant et à l'arrière un ventilateur arrière, ce rotor étant rotatif autour d'un axe de rotation,
- un stator comportant un corps de stator et au moins un bobinage placé sur le corps de stator, lequel bobinage forme des chignons avant et arrière de part et d'autre du corps de stator,
- un carter dans lequel sont placés le stator et le rotor, et le jeu, mesuré suivant l'axe de rotation, entre l'extrémité du ventilateur avant et le carter est différent de, notamment plus grand que, le jeu entre l'extrémité du ventilateur arrière et le carter,
caractérisée par le fait que
- ce carter comportant des ouvertures sensiblement latérales avant et des ouvertures sensiblement latérales arrières au moins partiellement en regard des chignons respectivement avant et arrière, la superficie totale de ces ouvertures avant étant différente de, notamment plus petite que, la superficie totale des ouvertures arrières, et/ou
- le carter comporte un bossage, notamment réalisé d'un seul tenant avec le reste du carter ou formé par une entretoise fixée sur le reste du carter, lequel bossage s'étend en direction du sommet de l'un des chignons pour réduire le passage entre ce chignon et le carter,
de manière à générer une différence de pression entre l'avant du carter et l'arrière du carter propre à engendrer un flux d'air axial renforcé sensiblement parallèle à l'axe de rotation et circulant dans l'entrefer entre le rotor et le stator.

L'invention a également pour objet une machine électrique tournante, notamment un alternateur ou un alterno-démarreur, pour véhicule automobile, comportant :
- un rotor portant un seul ventilateur qui est à l'avant ou à l'arrière sur le rotor, ce rotor étant rotatif autour d'un axe de rotation,
- un stator comportant un corps de stator et au moins un bobinage placé sur le corps de stator, lequel bobinage forme des chignons avant et arrière de part et d'autre du corps de stator,
- un carter dans lequel sont placés le stator et le rotor,
caractérisée par le fait que
- ce carter comportant des ouvertures sensiblement latérales avant et des ouvertures sensiblement latérales arrières au moins partiellement en regard des chignons respectivement avant et arrière, la superficie totale de ces ouvertures avant étant différente de, notamment plus petite que, la superficie totale des ouvertures arrières, et/ou
- le carter comporte un bossage, notamment réalisé d'un seul tenant avec le reste du carter ou formé par une entretoise fixée sur le reste du carter, lequel bossage s'étend en direction du sommet de l'un des chignons pour réduire le passage entre ce chignon et le carter,
de manière à générer une différence de pression entre l'avant du carter et l'arrière du carter propre à engendrer un flux d'air axial renforcé sensiblement parallèle à l'axe de rotation et circulant dans l'entrefer entre le rotor et le stator.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe, une machine électrique tournante selon un exemple de mise en oeuvre de l'invention,
- les figures 2 et 3 représentent deux autres exemples de mise en oeuvre de l'invention, et
- la figure 4 montre schématiquement l'évolution de la température en fonction du débit d'air axial dans une machine selon l'invention.

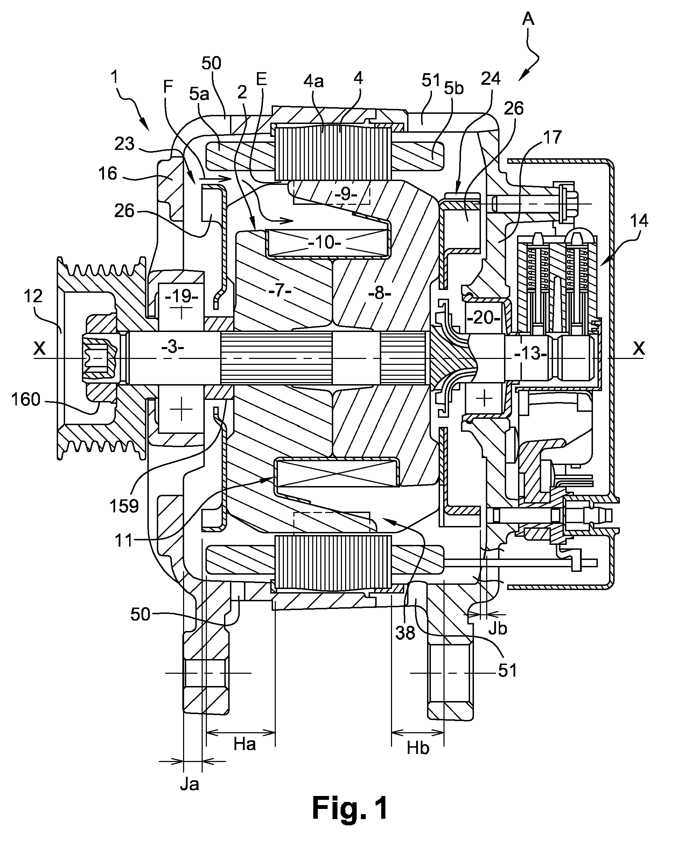

On a représenté sur la figure 1 un alternateur A compact et polyphasé, notamment pour véhicule automobile.

Cet alternateur transforme de l'énergie mécanique en énergie électrique et peut être réversible. Un tel alternateur réversible est appelé alterno-démarreur et permet de transformer de l'énergie électrique en énergie mécanique notamment pour démarrer le moteur thermique du véhicule.

Cet alternateur A comporte un carter 1 et, à l'intérieur de celui-ci, un rotor 2 à griffes, solidaire en rotation de manière directe ou indirecte d'un arbre 3, et un stator 4, qui entoure le rotor 2 avec présence d'un entrefer.

L'axe X-X de l'arbre 3 forme l'axe de rotation du rotor 2.

Dans la suite de la description les orientations radiale, transversale et axiale sont à considérer par rapport à cet axe X-X.

Le stator 4 comporte un corps 4a en forme d'un paquet de tôles doté d'encoches, par exemple du type semi fermé, équipées d'isolant d'encoches pour le montage des phases du stator, chaque phase comportant au moins un enroulement traversant les encoches du corps du stator et formant, avec toutes les phases, un chignon avant 5a et un chignon arrière 5b de part et d'autre du corps 4a du stator.

Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A 2 745 445.

Le rotor 2 comporte deux roues polaires 7, 8. Chaque roue 7, 8 présente un flasque d'orientation transversale pourvu à sa périphérie externe de dents 9 par exemple de forme trapézoïdale et d'orientation axiale. Les dents 9 d'une roue sont dirigées axialement vers le flasque de l'autre roue, la dent d'une roue polaire pénétrant dans l'espace existant entre deux dents 9 voisines de l'autre roue polaire, de sorte que les dents 9 des roues polaires soient imbriquées.

La périphérie externe des dents 9 est d'orientation axiale et définit avec la périphérie interne du corps 4a du stator l'entrefer E entre le stator 4 et le rotor 2.

La périphérie interne des dents 9 est inclinée. Ces dents 9 sont moins épaisses à leur extrémité libre.

Les flasques des roues 7, 8 sont de forme annulaire.

Un noyau cylindrique est intercalé axialement entre les flasques des roues 7,8. Ici ce noyau consiste en deux demi noyaux appartenant chacun à l'un des flasques.

Ce noyau porte à sa périphérie externe un bobinage d'excitation 10 bobiné dans un isolant 11 intercalé radialement entre le noyau et ce bobinage 10.

Dans l'exemple décrit, cet isolant 11 est en matière électriquement isolante et moulable, telle que de la matière plastique, tandis que les roues polaires 7, 8 et le noyau sont métalliques en étant ici en matière ferromagnétique, telle que de l'acier doux. L'arbre 3 est également métallique en étant en matériau ferromagnétique, tel que de l'acier, plus dur que les roues polaires et le noyau du rotor à griffes.

Le carter 1 comporte des palier avant 16 et palier arrière 17 assemblés ensemble.

Le palier arrière 17 porte le porte-balais, le régulateur de tension et au moins un pont redresseur.

Les paliers 16 et 17 sont de forme creuse et portent chacun centralement un roulement à billes respectivement 19 et 20 pour le montage à rotation de l'arbre 3 du rotor 2.

Une poulie 12 est fixée sur l'extrémité avant de l'arbre 3, ici à l'aide d'un écrou 160 en appui sur le fond de la cavité de cette poulie 12. Cette poulie 12 comporte une douille en contact avec la bague interne du roulement 19. Une entretoise 159 annulaire est intercalée axialement entre la face frontale de la roue polaire avant 7 et la bague interne du roulement 19. L'arbre 3 traverse l'entretoise 159 et la douille de la poulie 12.

L'extrémité avant de l'arbre 3 porte la poulie 12 appartenant à un dispositif de transmission de mouvements à au mois une courroie entre l'alternateur et le moteur thermique du véhicule automobile, tandis que l'extrémité arrière 13 de diamètre réduit de l'arbre 3 porte des bagues collectrices reliées par des liaisons filaires aux extrémités du bobinage 10. Des balais appartenant à un porte-balais 14 sont disposés de façon à frotter sur les bagues collectrices. Le porte-balais est relié à un régulateur de tension.

Lorsque le bobinage d'excitation 10 est alimenté électriquement à partir des balais, le rotor 2 est magnétisé et devient un rotor inducteur avec formation de pôles magnétiques Nord-Sud au niveau des griffes et donc des dents des roues polaires.

Ce rotor inducteur 10 crée un courant induit alternatif dans le stator induit lorsque l'arbre 3 tourne, le ou les ponts redresseurs permettant de transformer le courant alternatif induit en un courant continu, notamment pour alimenter les charges et les consommateurs du réseau de bord du véhicule automobile, ainsi que pour recharger la batterie dudit véhicule.

Ce rotor comporte des aimants permanents 38 interposés entre deux dents 9 voisines à la périphérie externe du rotor.

En variante, le rotor peut être dépourvu de tels aimants.

Dans l'exemple décrit, la hauteur Ha du chignon avant 5a, mesurée suivant l'axe de rotation X, est plus élevée que celle Hb du chignon arrière 5b.

La différence entre la hauteur Ha du chignon avant 5a et celle Hb du chignon arrière 5b est d'au moins 2.5 mm, étant par exemple de 3 mm.

Les paliers avant 16 et arrière 17 comportent des ouvertures sensiblement latérales avant 50 et arrière 51 pour le passage de l'air en vue de permettre le refroidissement de l'alternateur par circulation d'air engendrée par la rotation d'un ventilateur 23 sur la face frontale avant du rotor et d'un autre ventilateur 24 sur la face dorsale arrière du rotor, chaque ventilateur étant pourvu d'une pluralité de pales 26.

Les ouvertures latérales avant 50 et arrières 51 sont en regard des chignons respectivement avant 5a et arrière 5b, la superficie totale des ouvertures avant 50 étant plus petite que la superficie totale des ouvertures arrières 51.

En variante, dans un autre exemple de mise en oeuvre de l'invention, la superficie des ouvertures avant 50 peut être plus grande que celle des ouvertures arrières 51.

Dans l'exemple décrit, la superficie d'ouverture avant peut être plus faible que 90% du taux d'ouverture arrière.

Ces dissymétries, à savoir l'écart entre Ha et Hb et l'écart entre le taux d'ouverture avant et arrière, permettent de générer une différence de pression entre l'avant du carter et l'arrière du carter propre à engendrer un flux d'air axial F renforcé sensiblement parallèle à l'axe de rotation et circulant dans l'entrefer E entre le rotor et le stator, et entre les espaces inter- griffes des roues polaires léchant ainsi le bobinage du rotor.

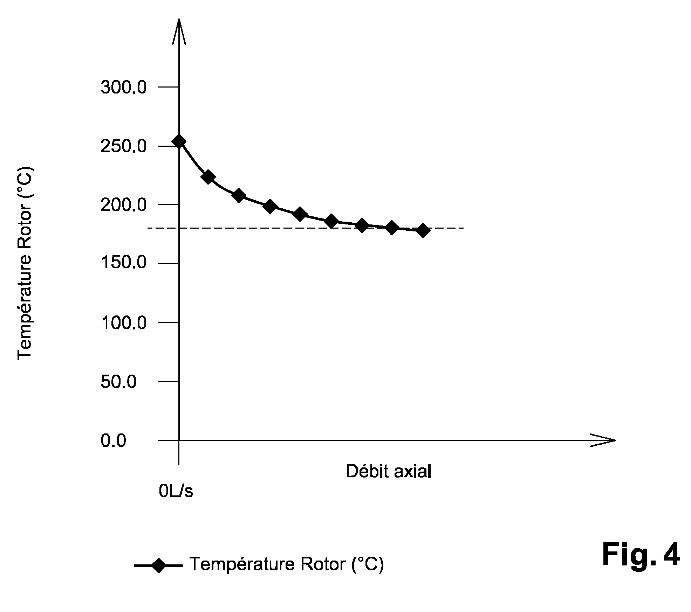

Plus ce débit d'air axial est élevé, plus la température du rotor est basse, comme le montre la figure 4.

Dans l'exemple décrit, l'alternateur A développe une puissance électrique de 3kW et le débit d'air axial est d'environ 2 L/s.

En plus des dissymétries précités, il est possible de prévoir que le jeu Ja, mesuré suivant l'axe de rotation, entre l'extrémité du ventilateur avant 23 et le carter est plus grand que le jeu Jb entre l'extrémité du ventilateur arrière 24 et le carter.

La différence entre le jeu Ja, mesuré suivant l'axe de rotation, entre l'extrémité du ventilateur avant, à savoir de ses pales, et le carter d'une part et le jeu Jb entre l'extrémité du ventilateur arrière et le carter d'autre part, est par exemple supérieur à ou d'environ 2 mm.

Dans un autre exemple de mise en oeuvre de l'invention (non représenté), il est possible de prévoir des valeurs identiques pour les jeux Ja et Jb.

Dans un autre exemple de mise en oeuvre, les ouvertures 50 et 51 peuvent ne pas présenter de dissymétrie substantielle.

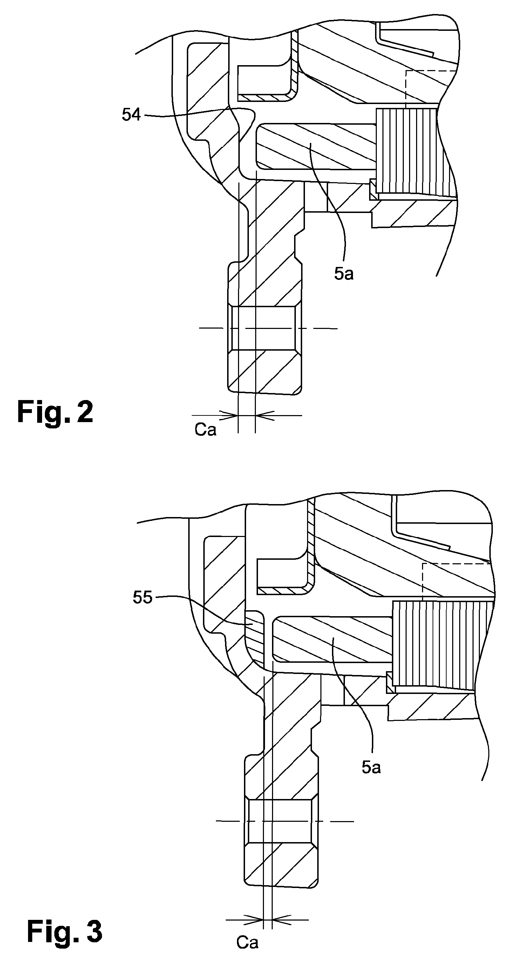

Dans ce cas, en plus de la dissymétrie sur la hauteur des chignons Ha et Hb, le carter peut comporter un bossage 54 réalisé d'un seul tenant avec le reste du carter, comme illustré sur la figure 2.

En variante, comme illustré sur la figure 3, ce bossage peut être formé par une entretoise 55 fixée sur le reste du carter, lequel bossage s'étend en direction du sommet de l'un des chignons pour réduire le passage entre ce chignon et le carter.

Dans ces exemples des figures 2 et 3, il y a une différence entre le jeu Ca, mesuré suivant l'axe de rotation, entre le sommet du chignon avant 5a et le carter d'une part et le jeu Cb entre le sommet du chignon arrière 5b et le carter d'autre part.

Ces bossages peuvent être répartis autour de l'axe X-X, par exemple à angle constant les uns par rapport aux autres.

La différence entre le jeu Ca, mesuré suivant l'axe de rotation, entre le sommet du chignon avant 5a et le carter d'une part et le jeu Cb entre le sommet du chignon arrière 5b et le carter d'autre part, est supérieur à 2.5 mm.

Le rotor comporte un bobinage de fils ayant une section totale d'au moins 200 mm2.

Bien entendu, on ne sort pas du cadre de la présente invention lorsque d'autres combinaisons de dissymétries sont utilisées.

Par exemple, le rotor peut être pourvu que d'un seul ventilateur, à l'avant ou l'arrière, cette dissymétrie étant de préférence associée à la dissymétrie des superficies des ouvertures arrières et avant, ou à la dissymétrie des jeux entre le sommet des chignons et le carter.

## Revendications

1. Machine électrique tournante, notamment un alternateur (A) ou un alterno-démarreur, pour véhicule automobile, comportant :
- un rotor (2) portant à l'avant un ventilateur avant et à l'arrière un ventilateur arrière, ce rotor étant rotatif autour d'un axe de rotation,
- un stator (4) comportant un corps (4a) de stator et au moins un bobinage placé sur le corps de stator (4a), lequel bobinage forme des chignons avant (5a) et arrière (5b) de part et d'autre du corps (4a) de stator,
- un carter (1) dans lequel sont placés le stator (4) et le rotor (2),
- le carter (1) comporte un bossage (54), notamment réalisé d'un seul tenant avec le reste du carter (1) ou formé par une entretoise (55) fixée sur le reste du carter, lequel bossage (54) s'étend en direction du sommet de l'un des chignons pour réduire le passage entre ce chignon et le carter (1),
la machine électrique tournante étant **caractérisée en ce que** :
- le jeu, mesuré suivant l'axe de rotation, entre l'extrémité du ventilateur avant (23) et le carter (1) est différent de, notamment plus grand que, le jeu entre l'extrémité du ventilateur arrière (24) et le carter (1),
de manière à générer une différence de pression entre l'avant du carter (1) et l'arrière du carter (1) propre à engendrer un flux d'air axial renforcé sensiblement parallèle à l'axe de rotation et circulant dans l'entrefer entre le rotor (2) et le stator (4),

2. Machine selon la revendication précédente selon laquelle le carter (1) comporte des ouvertures sensiblement latérales avant (50) et des ouvertures sensiblement latérales arrières (51) au moins partiellement en regard des chignons respectivement avant (5a) et arrière (5b), la superficie totale de ces ouvertures avant (50) étant différente de, notamment plus petite que, la superficie totale des ouvertures arrières (51).

3. Machine selon la revendication précédente, **caractérisée par le fait que** la différence entre la hauteur (Ha) du chignon avant et celle (Hb) du chignon arrière est non nulle, la différence étant notamment d'au moins 2.5 mm.

4. Machine selon l'une des revendications précédentes, **caractérisée par le fait que** la superficie d'ouverture avant (50) est plus faible que 90% de la superficie d'ouverture arrière (51).

5. Machine selon la revendication 1 ou 2, **caractérisée par le fait que** la superficie d'ouverture arrière (51) est plus faible que 90% de la superficie d'ouverture avant (50).

6. Machine selon la revendication précédente, **caractérisé par le fait que** la différence entre le jeu (Ja), mesuré suivant l'axe de rotation, entre l'extrémité du ventilateur avant (23) et le carter d'une part et le jeu (Jb) entre l'extrémité du ventilateur arrière (24) et le carter (1) d'autre part, est supérieur à 2 mm.

7. Machine selon l'une des revendications précédente, **caractérisé par le fait que** la différence entre le jeu (Ca), mesuré suivant l'axe de rotation, entre le sommet du chignon avant (5a) et le carter (1) d'une part et le jeu (Cb) entre le sommet du chignon arrière (5b) et le carter (1) d'autre part, est supérieur à 2.5 mm.

8. Machine selon l'une des revendications précédentes, **caractérisée par le fait que** le rotor (2) est dépourvu d'aimants permanents, notamment d'aimants insérés entre des griffes du rotor.

9. Machine selon l'une des revendications précédentes, **caractérisée par le fait que** le rotor (2) est capable de produire 1 500 Ampère-tours.

10. Machine selon l'une des revendications précédentes, **caractérisée par le fait que** le rotor (2) comporte un bobinage de fils ayant une section totale d'au moins 200 mm2.

## Patentansprüche

1. Drehende elektrische Maschine, insbesondere Wechselstromgenerator (A) oder Starter-Generator, für ein Kraftfahrzeug, die Folgendes umfasst:
- einen Rotor (2), der vorn ein vorderes Gebläse und hinten ein hinteres Gebläse trägt, wobei dieser Rotor um eine Drehachse drehbar ist,
- einen Stator (4) mit einem Statorkörper (4a) und mindestens einer Spule, die am Statorkörper (4a) angeordnet ist, wobei die Spule vordere (5a) und hintere (5b) Schaltenden auf beiden Seiten des Statorkörpers (4a) bildet,
- ein Gehäuse (1), in dem der Stator (4) und der Rotor (2) angeordnet sind,
- wobei das Gehäuse (1) einen Buckel (54) umfasst, der insbesondere einteilig mit dem Rest des Gehäuses (1) hergestellt ist oder durch eine Strebe (55) gebildet ist, die am Rest des Gehäuses befestigt ist, wobei sich der Buckel (54) in Richtung des Scheitelpunkts von einem der Schaltenden erstreckt, um den Durchgang zwischen diesem Schaltende und dem Gehäuse (1) zu verringern,
wobei die drehende elektrische Maschine **dadurch gekennzeichnet ist, dass**:
- das Spiel, gemessen entlang der Drehachse, zwischen dem Ende des vorderen Gebläses (23) und dem Gehäuse (1) verschieden ist von, insbesondere größer ist als das Spiel zwischen dem Ende des hinteren Gebläses (24) und dem Gehäuse (1),
um eine Druckdifferenz zwischen der Vorderseite des Gehäuses (1) und der Rückseite des Gehäuses (1) zu erzeugen, die einen verstärkten axialen Luftfluss im Wesentlichen parallel zur Drehachse erzeugen kann, der im Luftspalt zwischen dem Rotor (2) und dem Stator (4) zirkuliert.

2. Maschine nach dem vorangehenden Anspruch, gemäß der das Gehäuse (1) im Wesentlichen seitliche vordere Öffnungen (50) und im Wesentlichen seitliche hintere Öffnungen (51) zumindest teilweise gegenüber den vorderen (5a) bzw. hinteren (5b) Schaltenden umfasst, wobei die gesamte Oberfläche dieser vorderen Öffnungen (50) verschieden ist von, insbesondere kleiner ist als die gesamte Oberfläche der hinteren Öffnungen (51).

3. Maschine nach dem vorangehenden Anspruch, **dadurch gekennzeichnet, dass** die Differenz zwischen der Höhe (Ha) des vorderen Schaltendes und jener (Hb) des hinteren Schaltendes von null verschieden ist, wobei die Differenz insbesondere mindestens 2,5 mm ist.

4. Maschine nach einem der vorangehenden Ansprüche, **dadurch gekennzeichnet, dass** die Oberfläche der vorderen Öffnung (50) geringer ist als 90 % der Oberfläche der hinteren Öffnung (51).

5. Maschine nach Anspruch 1 oder 2, **dadurch gekennzeichnet, dass** die Oberfläche der hinteren Öffnung (51) geringer ist als 90 % der Oberfläche der vorderen Öffnung (50).

6. Maschine nach dem vorangehenden Anspruch, **dadurch gekennzeichnet, dass** die Differenz zwischen dem Spiel (Ja), gemessen entlang der Drehachse, zwischen dem Ende des vorderen Gebläses (23) und dem Gehäuse einerseits und dem Spiel (Jb) zwischen dem Ende des hinteren Gebläses (24) und dem Gehäuse (1) andererseits größer ist als 2 mm.

7. Maschine nach einem der vorangehenden Ansprüche, **dadurch gekennzeichnet, dass** die Differenz zwischen dem Spiel (Ca), gemessen entlang der Drehachse, und dem Scheitelpunkt des vorderen Schaltendes (5a) und dem Gehäuse (1) einerseits und dem Spiel (Cb) zwischen dem Scheitelpunkt des hinteren Schaltendes (5b) und dem Gehäuse (1) andererseits größer ist als 2,5 mm.

8. Maschine nach einem der vorangehenden Ansprüche, **dadurch gekennzeichnet, dass** der Rotor (2) ohne Permanentmagnete, insbesondere Magnete, die zwischen Klauen des Rotors eingesetzt sind, ist.

9. Maschine nach einem der vorangehenden Ansprüche, **dadurch gekennzeichnet, dass** der Rotor (2) 1500 Amperewindungen erzeugen kann.

10. Maschine nach einem der vorangehenden Ansprüche, **dadurch gekennzeichnet, dass** der Rotor (2) eine Spule mit Drähten mit einem gesamten Querschnitt von mindestens 200 mm² umfasst.

## Claims

1. Rotating electrical machine, notably an alternator (A) or an alternator-starter, for a motor vehicle, comprising:
- a rotor (2) bearing, at the front, a front fan and, at the rear, a rear fan, this rotor being rotary about an axis of rotation,
- a stator (4) comprising a stator body (4a) and at least one winding placed on the stator body (4a), which winding forms front (5a) and rear (5b) heads on either side of the stator body (4a),
- a casing (1) in which the stator (4) and the rotor (2) are placed,
- the casing (1) comprises a boss (54), notably produced of a single piece with the rest of the casing (1) or formed by a spacer (55) fixed to the rest of the casing, which boss (54) extends towards the summit of one of the heads to reduce the passage between this head and the casing (1),
the rotating electrical machine being **characterized in that**:
- the gap, measured along the axis of rotation, between the end of the front fan (23) and the casing (1) is different from, notably greater than, the gap between the end of the rear fan (24) and the casing (1),
so as to generate a pressure difference between the front of the casing (1) and the rear of the casing (1) specifically to generate a stronger axial airflow substantially parallel to the axis of rotation and circulating in the air gap between the rotor (2) and the stator (4).

2. Machine according to the preceding claim, according to which the casing (1) comprises substantially lateral front openings (50) and substantially lateral rear openings (51) at least partially facing the respectively front (5a) and rear (5b) heads, the total surface area of these front openings (50) being different from, notably smaller than, the total surface area of the rear openings (51).

3. Machine according to the preceding claim, **characterized in that** the difference between the height (Ha) of the front head and that (Hb) of the rear head is not nil, the difference being notably at least 2.5 mm.

4. Machine according to one of the preceding claims, **characterized in that** the front opening (50) surface area is smaller than 90% of the rear opening (51) surface area.

5. Machine according to Claim 1 or 2, **characterized in that** the rear opening (51) surface area is smaller than 90% of the front opening (50) surface area.

6. Machine according to the preceding claim, **characterized in that** the difference between the gap (Ja), measured along the axis of rotation, between the end of the front fan (23) and the casing on the one hand, and the gap (Jb) between the end of the rear fan (24) and the casing (1) on the other hand, is greater than 2 mm.

7. Machine according to one of the preceding claims, **characterized in that** the difference between the gap (Ca), measured along the axis of rotation, between the summit of the front head (5a) and the casing (1) on the one hand, and the gap (Cb) between the summit of the rear head (5b) and the casing (1) on the other hand, is greater than 2.5 mm.

8. Machine according to one of the preceding claims, **characterized in that** the rotor (2) has no permanent magnets, notably magnets inserted between claws of the rotor.

9. Machine according to one of the preceding claims, **characterized in that** the rotor (2) is capable of producing 1,500 ampere-turns.

10. Machine according to one of the preceding claims, **characterized in that** the rotor (2) comprises a winding of wires having a total section of at least 200 mm2.
